Europäisches Patentamt

European Patent Office

Office européen des brevets

(19)

(11) Veröffentlichungsnummer: **0 008 592**
B2

(12) # NEUE EUROPÄISCHE PATENTSCHRIFT

(45) Veröffentlichungstag der neuen Patentschrift:
17.09.86

(21) Anmeldenummer: 78100878.4

(22) Anmeldetag: 13.09.78

(51) Int. Cl.⁴: **B 62 D 27/06**, B 62 D 33/04,
B 62 D 25/02, B 62 D 29/00,
E 04 B 1/60

(54) **Wand- oder Dachelement, insbesondere von Fahrzeugaufbauten.**

(43) Veröffentlichungstag der Anmeldung:
**19.03.80 Patentblatt 80/6**

(45) Bekanntmachung des Hinweises auf die Patenterteilung:
**04.11.81 Patentblatt 81/44**

(45) Bekanntmachung des Hinweises auf die Entscheidung
über den Einspruch:
**17.09.86 Patentblatt 86/38**

(84) Benannte Vertragsstaaten:
**BE CH GB NL SE**

(56) Entgegenhaltungen:
**CH - A - 396 370
CH - A - 455 536
DE - A - 1 475 241
DE - A - 2 700 626
DE - C - 878 124
DE - U - 7 205 855
DK - A - 102 841
FR - A - 1 377 561
FR - A - 2 126 297
GB - A - 1 215 523
GB - A - 1 291 179
US - A - 3 205 001
US - A - 3 232 395
US - A - 3 363 383**

(73) Patentinhaber: **Austria Metall Aktiengesellschaft,
A-5282 Braunau am Inn (AT)**

(72) Erfinder: **Högl, Johann, Ing., Schlossstrasse 16,
A-5280 Braunau/Inn (AT)**
Erfinder: **Peter, Erwin, Ing., Mozartstrasse 58,
A-5280 Braunau/Inn (AT)**

(74) Vertreter: **Hain, Leonhard, Dipl.-Ing., Tal 18/IV,
D-8000 München 2 (DE)**

EP 0 008 592 B2

ACTORUM AG

Beschreibung

Die Erfindung betrifft ein Wand- oder Dachelement, insbesondere von Fahrzeugaufbauten, gemäss dem Oberbegriff des Patentanspruches 1.

Bei einem bekannten Wandelement, insbesondere von Metallgebäuden (DE-C 878 124), werden die V-förmig abgekanteten Ränder von Verkleidungsblechen in entsprechenden Ausnehmungen eines Skelettprofiles durch eine metallische Federleiste gehalten, die mit ihren seitlichen, ebenfalls V-förmig eingebogenen Fixierorganen in diese Ausnehmungen eingreift. Zur Halterung der Federleiste in dieser Klemmstellung weist das Skelettprofil einen zwischen den Fixierorganen hochstehenden Anschlagwulst auf, den die Enden der Fixierorgane hintergreifen. Da dieser Anschlagwulst bis nahe an die Federleiste heranreicht, ist ein Aufschneiden der Federleiste zur Demontage des Wandelementes nicht ohne Beschädigung bzw. Zerstörung des Anschlagwulstes und damit des Skelettprofiles möglich. Eine aus einem federnden Material bestehende Federleiste vermag auch keine Zugkräfte aufzunehmen, so dass bei Ausübung von verstärktem Zug auf die Verkleidungsbleche die seitlichen Fixierorgane nachgeben und einer Verformung der Skelettprofil-Seitenwände keinen Widerstand entgegensetzen, mit der Folge, dass die eingebogenen Federleistenenden am Anschlagwulst ausklinken. Diese Gefahr besteht vor allem auch bei an Fahrzeugaufbauten häufig auftretenden Verwindungskräften. Mit einer elastischen Federleiste ist es ausserdem nicht möglich, zusammen mit den anschliessenden Verkleidungsblechen eine glatte, ebene Oberfläche zu bilden. Bei anderen bekannten Wandelementen (DK-A 102 841 und GB-A 1 215 523) ist für die Innenverkleidung von Fahrzeugen eine Schraubverbindung an der Abdeck- bzw. Klemmleiste dadurch vermieden, dass die Klemmleiste einschnappbare Schenkel aufweist, die entsprechende Profilfortsätze bzw. Nasen hintergreifen. Diese Klemmleisten können aber nur plane Verkleidungsbleche aufnehmen, wobei eine zugfeste Verbindung nicht erreichbar ist, was bei diesen bekannten Wandelementen auch nicht angestrebt wird, da es sich um Fahrzeug-Innenverkleidungen handelt. Schliesslich lässt sich mit einer auf plane Blechränder aufgesetzten Klemmleiste auch keine glatte, ebene Oberfläche erzielen.

Der Erfindung liegt daher die Aufgabe zugrunde, ein Wand- oder Dachelement, insbesondere von Fahrzeugaufbauten, zu schaffen, bei dem die Verkleidungsbleche zugfest festsitzen, diese Verbindung dennoch leicht montier- und demontierbar ist und die die Verkleidungsbleche haltende Klemmleiste mit diesen Blechen eine glatte Ebene bildet.

Diese Aufgabe wird an einem Wand- oder Dachelement gemäss dem Oberbegriff des Patentanspruches 1 erfindungsgemäss durch die kennzeichnenden Merkmale dieses Patentanspruches gelöst.

Ein solches Wand- oder Dachelement ermöglicht die Bildung einer glatten Wandfläche, bei der die relativ dünnen Zwischenbleche mit den Skelettprofilen dicht und formschlüssig verbunden sind. Es können grosse Zugkräfte übertragen werden, so dass diese Wand auch mittels Spannschrauben gespannt werden kann, wenn eine vollkommen ebene und beulenfreie Oberfläche geschaffen werden soll. Das erfindungsgemässe Wand- oder Dachelement ist ausserdem leicht montier- und demontierbar, weil keine Nieten, Schrauben od. dgl. Verbindungsorgane benötigt werden.

Weitere Merkmale der Erfindung sind in Unteransprüchen beansprucht.

Einzelheiten der Erfindung werden nachfolgend anhand von Ausführungsbeispielen, die auch in der Zeichnung dargestellt sind, näher beschrieben. Es zeigen:

Fig. 1 eine Draufsicht auf eine erste Ausführungsform,

Fig. 2 eine Draufsicht auf eine Eckenkonstruktion mit einer Verspannungseinrichtung,

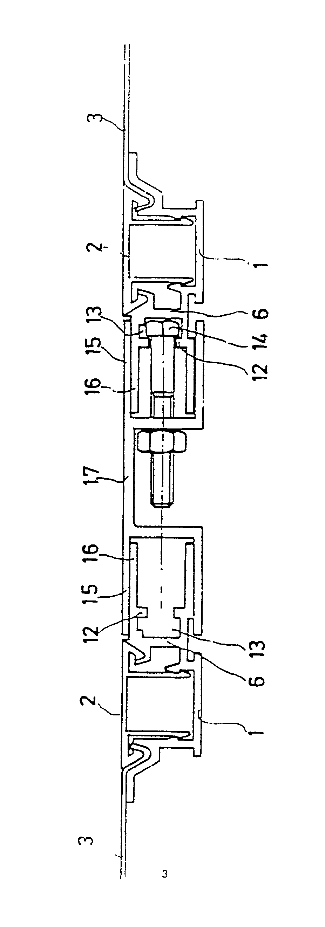

Fig. 3 eine Draufsicht auf eine ebene Wandverbindung mit Verspannungseinrichtung,

Fig. 4 eine Draufsicht ähnlich Fig. 1, mit Dichtungseinlagen,

Fig. 5 eine Ansicht eines räumlichen Skelettaufbaues, verkleinert,

Fig. 6 eine Draufsicht auf ein Verkleidungsblech für den Skelettausbau gemäss Fig. 5,

Fig. 7 eine Knotenverbindung hierzu, und

Fig. 8 ein zweischaliges Wandelement mit zwischenliegender Wärmedämmschicht.

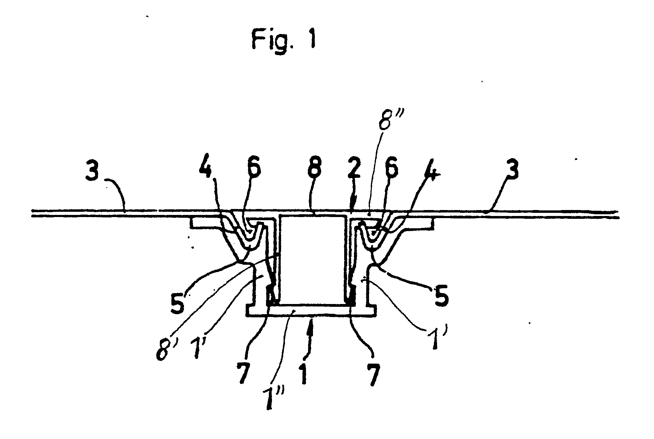

Die Wandkonstruktion nach Fig. 1 besteht im wesentlichen aus drei Bauelementen: einem Skelettprofil 1, einer Klemmleiste 2 und den die Wandfläche bildenden Verkleidungsblechen 3, deren Ränder 4 U-, V- oder Z-förmig ausgebildet sind. Diese abgekanteten Ränder sind in entsprechend geformte, aussen an den Enden der Seitenwände 1' des Skelettprofiles 1 ausgebildete Ausnehmungen 5 formschlüssig eingelegt und durch formschlüssig eingesetzte Rippen 6 an die Fixierorgane bildenden seitlichen vorstehenden Fortsätzen 8'' der Klemmleiste 2 in dieser Lage zugfest fixiert. Die Klemmleiste 2 weist vom Leistensteg 8 in das U-förmige Skelettprofil hineinstehende Leistenschenkel 8' auf, die mit dem Leistensteg 8 ebenfalls eine U-Form bilden und nahe am Basissteg 1'' an deren Enden innen an den Seitenwänden 1' vorstehende Nasen 7 elastisch hinterhaken.

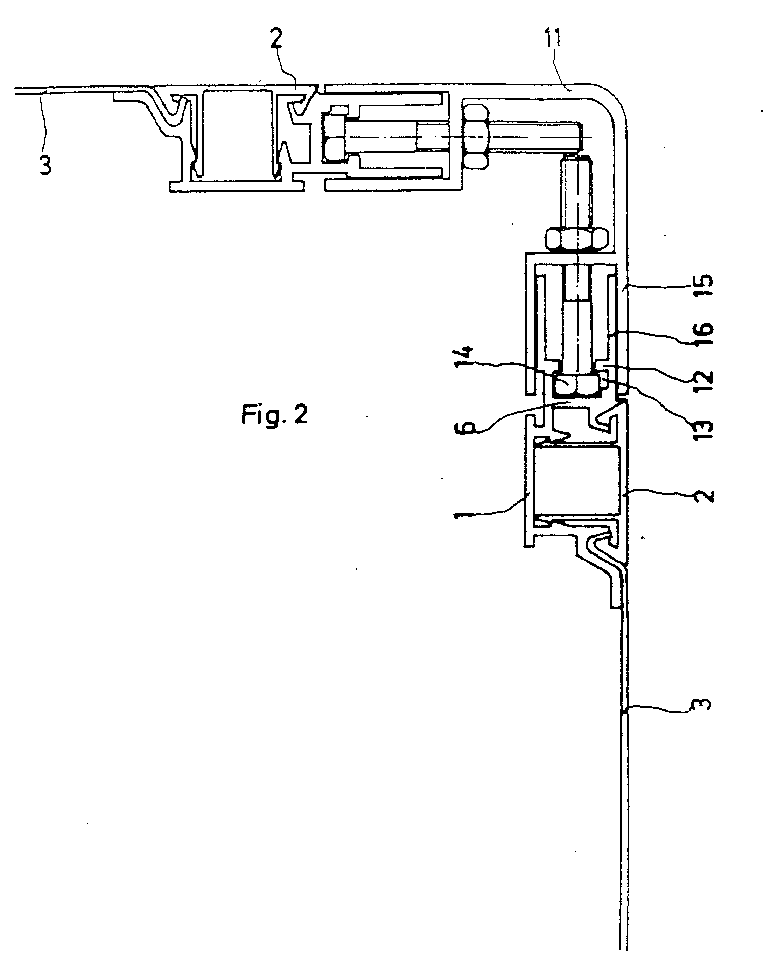

Die formschlüssige Verbindung aller drei Elemente und die Zugbandwirkung der Klemmleiste 2 garantieren bei glatter und dichter Oberfläche auch bei hoher Beanspruchung, wie z.B. durch Windbelastung oder Verwindung, einen satten unnachgiebigen Sitz, so dass im Verbindungsbereich kein Aufklaffen und Reissen einer eventuellen Decklackierung entsteht. Bei Austausch eines unter Umständen beschädigten Verkleidungsbleches 3 wird lediglich die Klemmleiste 2 entfernt, ein neues Verkleidungsblech 3 und eine neue Klemmleiste 2 eingesetzt. Je nach Anwendung und Einsatz kann die Schnappverbindung 7 zwischen Klemmleiste 2 und Skelettprofil 1 leicht lösbar oder aber selbsthemmend ausgeführt werden, so dass nur bei Zerstörung der Klemmleiste 2 ein Austausch der Verkleidungsbleche 3 erfolgen kann. Da alle Profile und Bieche aus Leichtmetall bestehen, ist auch eine entsprechende Korrisionsbeständigkeit gegeben. Um die relativ dünnen Bleche 3 in ihrer gesamten Fläche eben ausspannen zu können, werden an den Ekken bzw. Rändern modifizierte Skelettprofile 1 verwendet, welche an der dem Eck- oder Randprofil 11 gemäss Fig. 2 zugewandten Seite mit Rippen 12 versehene Schenkel aufweisen, welche in die Eckprofile verschieblich eingreifen und gleichzeitig T-förmige Nuten 13 bilden, in welche die Köpfe 14 der Verbindungs- und Spannschrauben eingeschoben und gegen Verdrehen gesichert sind. Durch Anziehen dieser Schrauben kann somit eine Verspannung auf die Skelettprofile 1 und somit auch auf die Bleche 3 aufgebracht werden, welche die Bleche straff und eben hält. Die notwendige Dichtigkeit besorgen verlängerte Rippen 16 der Skelettprofile 1, welche zwischen U-förmigen Schenkeln 15 der Eckprofile 11 eingreifen und diese auf einer längeren Strecke überlappen. Es ist selbstverständlich auch möglich, noch zusätzliche elastische Dichtungsprofilstreifen einzulegen, welche ebenfalls durch die Schrauben 14 gleich mitgequetscht werden können.

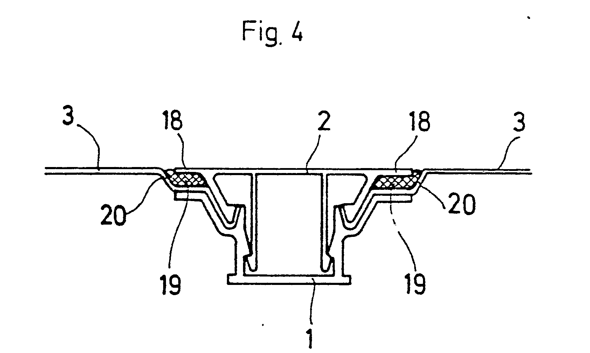

Fig. 4 zeigt eine alternative Ausführung, bei der die Klemmleiste 2 in Verlängerung des oberen Gurtes Profillappen 18 aufweist, die mit den Kröpfungen 20 der Bleche 3 Kammern bilden, die zur Aufnahme eines Dichtungsmittels 19 dienen. Damit kann eine einseitig ebene, absolut dichte Platte hergestellt werden.

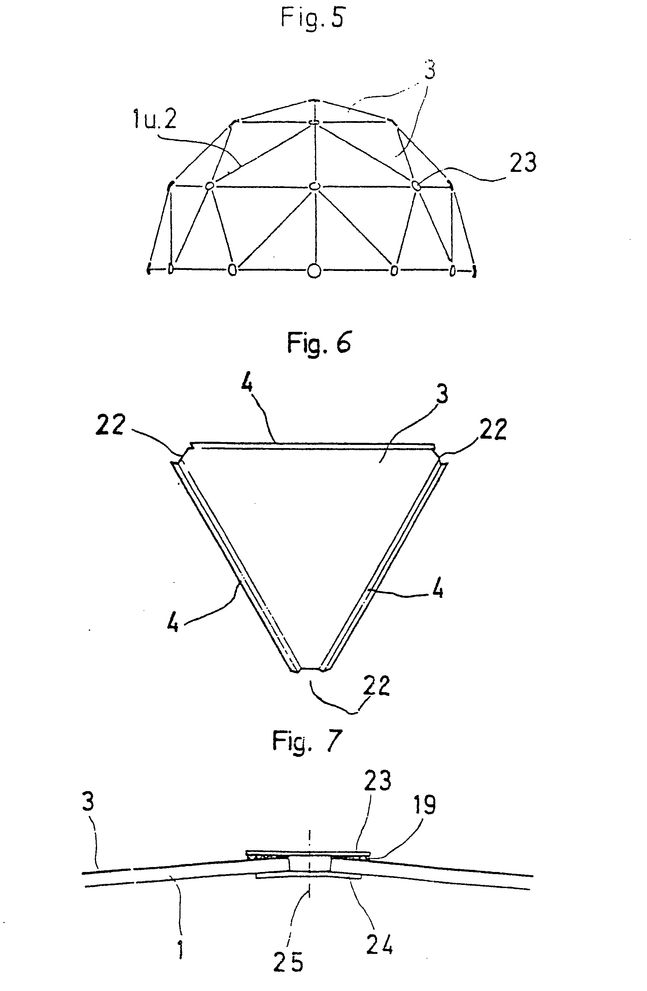

Die Fig. 5, 6 und 7 zeigen beispielsweise die Anwendungsmöglichkeit der in Fig. 4 gezeigten abgedichteten Variante als räumliches Gebilde. Dabei sind alle Ränder 4 der Bleche 3 U- oder Z-förmig ausgebildet. Die Ecken 22 der Bleche 3 sind vorzugsweise zurückgeschnitten (Fig. 6). Die Abdichtung der Eckstösse erfolgt durch eine Platte 23 mit Gegenplatte 24 über Befestigungsmittel 25 und Dichtungsmittel 19. Die Bleche 3 sind entsprechend der räumlichen oder ebenen Fläche als Drei-, Vier- oder Vieleck ausgebildet. Diese Bauart ergibt eine glatte Aussenhaut, bei der ungehinderter Wasserablauf gewährleistet wird.

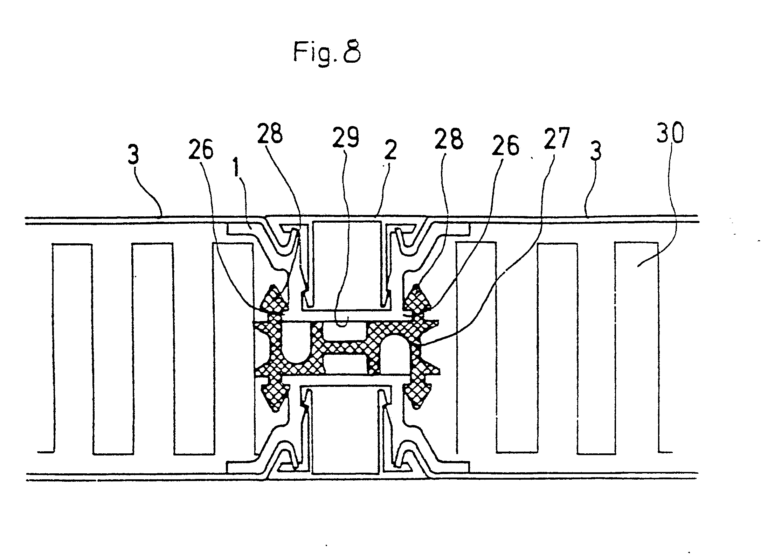

Fig. 8 veranschaulicht die Anwendung der Erfindung für doppelwandige, schall- und wärmedämmende Wände, z.B. für Kühlhäuser, Kühlwagen oder Container, wobei zwei Wandschalen über ein wärmedämmendes, elastisches Zwischenglied 27, vorzugsweise aus Kunststoff, verbunden werden. Dazu weist das Skelettprofil 1 am verlängerten unteren Gurt 29 beidseits Vorsprünge 26 auf, über die die Nasen 28 des Zwischengliedes 27 greifen und der Zwischenraum zwischen den Blechen 3 durch Wärmedämmstoffe 30 ausgefüllt ist. Das Zwischenglied 27 ist vorzugsweise als kurzes Verbindungsstück ausgebildet, wobei die Abstände der Anordnung desselben den Erfordernissen angepasst sind.

Die Erfindung ist auf die dargestellten Ausführungsbeispiele nicht beschränkt. Sie kann auch bei vorfabrizierten Häusern und sonstigen aus dünnem Blech bestehenden Wandungen angewendet werden, wobei die Spannvorrichtung von der Verbindung insofern unabhängig ist, als sie auch bei z.B. durch Schrauben oder Kleben bewirkter Befestigung der Verkleidungsbleche 3 an den Profilen 1 anwendbar ist.

**Patentansprüche**

1. Wand- oder Dachelement, insbesondere von Fahrzeugaufbauten, mit einem Skelettprofil (1) mit etwa V-förmigen Ausnehmungen (5) zur formschlüssigen Aufnahme von entsprechend abgekanteten Rändern (4) von Verkleidungsblechen (3), einer aus einem Steg (8) und seitlichen Fixierorganen, die die in die Ausnehmungen (5) eingelegten Ränder (4) formschlüssig übergreifen, bestehenden metallischen selbsthemmenden Klemmleiste (2) sowie mit Einschnappeinrichtungen zum Festhalten der Klemmleiste im Skelettprofil, dadurch gekennzeichnet, dass

a) das Skelettprofil (1) aus den Seitenwänden (1') und einem Basissteg (1″) eine U-Form bildet,
b) an den Enden dieser Seitenwände (1') die Ausnehmungen (5) ausgebildet sind,
c) die Klemmleiste (2) mit ihren vom Steg (8) in das U-förmige Skelettprofil hineinstehenden Leistenschenkeln (8') ebenfalls U-förmigen Querschnitt aufweist,
d) die Enden der Leistenschenkel (8') von den Seitenwänden (1') des Skelettprofiles vorstehende Nasen (7') elastisch hinterhaken,
e) der als Zugband wirkende Leistensteg (8) seitlich über die Leistenschenkel (8') vorstehende Fortsätze (8″) aufweist, an deren Enden die Fixierorgane ausgebildet sind, und
f) Leistensteg (8) und Fortsätze (8″) mit den zu verbindenden Verkleidungsblechen (3) eine glatte Ebene bilden.

2. Wandelement nach Anspruch 1, dadurch gekennzeichnet, dass das Skelettprofil (1) einseitig mit Rippen (12) versehene Führungsschenkel (16) aufweist, welche in ein Eck- oder Randprofil (11, 17) verschieblich eingreifen und Schrauben (14) zur Verspannung dieses Eck- oder Randprofiles mit dem Skelettprofil (1) eingesetzt sind.

3. Wandelement nach Anspruch 1 oder 2, dadurch gekennzeichnet, dass die Klemmleiste (2) in Verlängerung der Fortsätze (8″) seitliche Profillappen (18) aufweist, die mit Kröpfungen (20) der Verkleidungsbleche (3) Kammern zur Aufnahme eines Dichtungsmittels (19) bilden.

4. Wandelement nach Anspruch 3, dadurch gekennzeichnet, dass die Enden der Profillappen (18) nach einwärts gebogen sind und unter Bildung von Kammern für das Dichtungsmittel das abgewinkelte Verkleidungsblech (3) überlappen.

5. Wandelement nach einem der Ansprüche 1-4, dadurch gekennzeichnet, dass an einer doppelwandigen Wandkonstruktion die Skelettprofile (1) mit ihren Basisstegen (29) zueinander angeordnet und diese Basisstege (29) mit einem wärmedämmenden Zwischenglied (27) verbunden sind.

6. Wandelement nach Anspruch 5, dadurch gekennzeichnet, dass das Zwischenglied (27) aus elastischem Werkstoff besteht.

7. Wandelement nach Anspruch 5 oder 6, dadurch gekennzeichnet, dass die Basisstege (29) seitliche Rippen oder Vorsprünge (26) aufweisen, über die die Nasen (28) des Zwischengliedes (27) greifen.

## Claims

1. Wall or roof element, especially of vehicle superstructure, comprising a skeleton profile (1) having approximately V-shaped recesses (5) for tightly taking up correspondingly edged rims (4) of lining sheets (3), a metallic self-locking clamping ledge (2) consisting of a web (8) and laterally arranged fixing elements which tightly overlap the rims (4) inserted in the recesses (5) as well as catching elements for holding the clamping ledge in the skeleton profile, characterized in that

a) the side walls (1') and a base web (1") of the skeleton profile (1) form a U-shape,
b) at the ends of said side walls (1') the recesses (5) are formed,
c) the clamping ledge (2) with its legs (8') protruding from the web (8) into the U-shaped skeleton profile also has a U-shaped cross section,
d) the ends of the legs (8') of the ledge resiliently hook behind noses (7') protruding from the side walls (1') of the skeleton profile,
e) the web (8) acting as a tie-band has extensions (8") which protrude laterally beyond the legs (8') of the ledge and at the ends of which the fixing elements are formed and
f) the web (8) of the ledge and the extensions (8") form a smooth plane with the lining sheets (3) to be connected.

2. Wall element according to claim 1, characterized in that the skeleton profile (1) has guide legs (16) with ribs (12) on one side, the guide legs engaging displaceably with a corner or edge profile (11, 17) and that screws (14) are provided for bracing this corner or edge profile with the skeleton profile (1).

3. Wall element according to claim 1 or 2, characterized in that the clamping ledge (2) has lateral profile flanges (18) in prolongation of the extensions (8"), the profile flanges forming chambers for receiving a sealing means (19) together with camberings (20) of the lining sheets (3).

4. Wall element according to claim 3, characterized in that the ends of the profile flanges (18) are bent inwardly and overlap the curved lining sheet (3) by forming chambers for the sealing means.

5. Wall element according to one of the claims 1 to 4, characterized in that at a double-walled wall construction the skeleton profiles with their base webs (29) are arranged towards one another and these webs (29) are connected to a heat-insulating intermediate member (27).

6. Wall element according to claim 5, characterized in that the intermediate member (27) is made of resilient material.

7. Wall element according to claim 5 or 6, characterized in that the base webs (29) have ribs or projecting parts (26) on each side overlapped by the noses (28) of the intermediate member (27).

## Revendications

1. Elément de paroi ou de toit, en particulier de superstructures de véhicule, comportant un profilé de squelette (1) avec des renfoncements (5) en V pour recevoir avec encastrement des bords (4) pliés analoguement de plaques de revêtement (3), une latte de blocage métallique autobloquante (2) qui est composée d'une âme (8) et des organes de fixation latéraux qui s'appliquent avec encastrement par dessus les bords (4) insérés dans les renfoncements et aussi des dispositifs d'encliquetage pour retenir la latte de blocage dans le profilé de squelette, caracterisé par le fait que

a) le profilé de squelette (1) forme un U par les parois latérales (1') et une âme de base (1"),
b) que les renfoncements (5) sont formés sur les extremités de ces parois latérales (1'),
c) que la latte de blocage (2) avec ses ailes (8') qui se dressent dans le profilé de squelette en U a aussi une section en U,
d) que les extrémités des ailes (8') de la latte s'accrochent élastiquement à des becs (7') dépassants des parois latérales (1') du profilé de squelette,
e) que l'âme (8), jouant le rôle de tirant, a des prolongements (8") qui dépassent latéralement les ailes (8') de la latte et que les organes de fixation sont formées sur les extrémités des prolongements et que
f) l'âme (8) de la latte et les prolongements (8") forment un plan lisse avec les plaques de revêtements (3) à assembler.

2. Elément de paroi selon la revendication 1, caracterisé par le fait que le profilé de squelette (1) présente des ailes de guidage (16) qui ont d'un côté des nervures (12) qui s'engagent en pouvant coulisser dans un profilé d'angle ou de bord (11, 17) et que des vis (14) sont insérées pour assurer le serrage de ce profilé d'angle ou de bord avec le profilé de squelette (1).

3. Elément de paroi selon la revendication 1 ou 2, caractérisé par le fait que la latte de blocage (2) présente, dans l'élongation des prolongements (8") des languettes profilées latérales (18) qui forment, avec des décrochements (20) des plaques de revêtement (3), des chambres destinées à recevoir un moyen d'étanchéité.

4. Elément de paroi selon la revendication 3, caracterisé par le fait que les extrémités des languettes profilées (18) sont coudées vers l'intérieur et chevauchent la plaque de revêtement pliée (3) en formant des chambres pour le moyen d'étanchéité.

5. Elément de paroi selon l'une des revendications 1 à 4, caracterisé par le fait que sur une structure à double paroi les profilés de squelette (1) sont tournés l'un vers l'autre par leurs âmes de base (29) et que ces âmes de base (29) sont reliées à un élément intermédiaire calorifuge (27).

6. Elément de paroi selon la revendication 5, caracterisé par le fait que l'élément intermédiaire est formé d'un matériau élastique.

7. Elément de paroi selon la revendication 5 ou 6, caracterisé par le fait que les âmes de base (29) présentent latéralement des nervures ou saillies (26) par dessus lesquelles s'engagent les becs (28) de l'élément intermédiaire (27).

## Fig. 1

Fig. 2

Fig. 4

## Fig. 5

## Fig. 6

## Fig. 7

Fig. 8